# FASCICULE DE BREVET EUROPEEN

(11) **EP 1 595 749 B1**
(45) Date de publication et mention de la délivrance du brevet: **23.01.2008**
(21) Numéro de dépôt: 05290607.0
(22) Date de dépôt: 18.03.2005
(51) Int. Cl.: B60R 19/34, B60R 19/18

(54) **Procédé de fabrication d'une platine de support d'un absorbeur d'énergie d'un pare-chocs et platine de support obtenue par un tel procédé**
Verfahren zur Erstellung einer Trägerplatte einer energieabsorbierenden Stossstange und durch dieses Verfahren erhaltene Trägerplatte
Method of manufacturing a support plate of shock absorber for bumper beam and support plate obtained by this method

(30) Priorité: 22.03.2004 FR 0402934; 22.03.2004 FR 0402933
(43) Date de publication de la demande: 16.11.2005
(73) Titulaire: Peugeot Citroën Automobiles S.A., 78140 Vélizy Villacoublay (FR)
(72) Inventeur: Masson, Patrick, 92370 Chaville (FR)
(74) Mandataire: Lanceplaine, Jean-Claude

(56) Documents cités:
- EP-A- 1 219 499
- DE-A- 19 533 366
- DE-A- 19 904 879
- DE-A1- 10 145 446
- DE-C- 19 603 953
- US-A1- 2002 063 433
- US-A1- 2002 113 447
- US-A1- 2002 167 183
- US-A1- 2003 034 659
- US-B1- 6 192 584

## Description

La présente invention concerne un procédé de fabrication d'au moins une platine de support d'un absorbeur d'énergie d'un pare-chocs de véhicule automobile ainsi qu'une platine de support d'un absorbeur de chocs réalisée par un tel procédé.

L'invention concerne également un pare-chocs pour véhicule automobile.

Les constructeurs de véhicules automobiles ont pour soucis d'améliorer la sécurité des passagers et de réduire l'augmentation de poids de ces véhicules.

Pour la sécurité notamment lors d'un choc frontal ou d'un choc arrière, les constructeurs optimisent les différentes parties du véhicule de façon à garantir un maximum d'absorption cinétique par déformation mécanique des zones éloignées de l'habitacle et à renforcer l'habitacle de façon à préserver les passagers.

Afin de minimiser les chocs que subissent les occupants, les constructeurs utilisent de plus en plus des éléments d'absorption d'énergie disposés notamment à l'avant ou à l'arrière du véhicule et les pare-chocs doivent répondre à des normes techniques notamment en ce qui concerne la résistance aux chocs.

Pour cela, on connaît des pare-chocs qui sont constitués par une poutre transversale et par au moins deux absorbeurs d'énergie s'étendant perpendiculairement à cette poutre et reliés chacun, d'une part, à ladite poutre, et d'autre part, à un longeron de la structure du véhicule par l'intermédiaire d'une platine de support.

Les absorbeurs d'énergie sont le plus souvent formés chacun par un corps creux qui peut présenter des profils particuliers, comme par exemple des profits en forme de croix à quatre branches ou un profit évasé à sections étagées ou comporter des zones d'amorce de la déformation dudit corps creux en cas de chocs. Ils sont fixés respectivement à la poutre transversale et à la platine de support par des moyens appropriés, comme par exemple des organes de vissage ou encore au moyen d'un cordon ou de points de soudure.

La liaison entre l'absorbeur d'énergie et le longeron est le plus souvent réalisée par une platine qui comporte une semelle destinée à être fixée sur l'extrémité du longeron et qui est munie, sur une de ses faces d'une portion cylindrique de fixation du corps creux de l'absorbeur d'énergie.

Les éléments constituant le pare-chocs, c'est à dire la poutre transversale, les absorbeurs d'énergie ainsi que les platines de support sont, dans la plupart des cas, réalisés en acier et présentent donc un poids important. Par ailleurs, l'assemblage de ces différents éléments demande plusieurs opérations successives augmentant de ce fait le coût.

On connait dans le document DE 19603953C un pare-chocs pour véhicule automobile qui correspond au préambule de la revendication 5.

US 6,192,584 décrit un procédé de fabrication d'au moins une platine de support d'un pare-chocs de véhicule automobile, du type comprenant une semelle de fixation sur l'extrémité d'un longeron et comportant sur une des faces de la semelle une portion d'encastrement, comportant les phases suivantes :
- on réalise par extrusion à partir d'au moins un lopin en aluminium ou en alliage d'aluminium au moins une ébauche comportant une semelle de forme correspondant sensiblement à la forme de la semelle de la platine munie sur l'une de ses faces, de deux membrures longitudinales et parallèles, s'étendant perpendiculairement à ladite face,
- on découpe la base des membrures de la semelle en ménageant au milieu une portion de liaison avec ladite semelle pour former, sur chaque membrure deux portions libres séparées de la semelle et disposées de part et d'autre de ladite portion de liaison,
- on recourbe chaque portion libre pour amener le bord d'extrémité des portions libres des deux membrures en contact, et
- on soude les bords d'extrémités adjacents entre eux et la base des portions libres des membrures sur la semelle pour former la portion d'encastrement.

L'invention a donc pour but de proposer un procédé de fabrication d'une platine de support d'un absorbeur d'énergie qui permet de réduire le poids d'une telle pièce, tout en permettant d'obtenir une pièce possédant des caractéristiques mécaniques comparables aux pièces utilisées jusqu'à présent.

L'invention a aussi pour but de proposer un pare-chocs de véhicule automobile dont la conception permet d'obtenir un gain de masse et surtout d'optimiser les épaisseurs de la matière, tout en accroissant le potentiel d'absorption d'énergie d'un tel pare-chocs.

L'invention a donc pour objet un procédé de fabrication d'au moins une platine de support d'un absorbeur d'énergie d'un pare-chocs de véhicule automobile, du type comprenant une semelle de fixation sur l'extrémité d'un longeron et comportant un orifice central bordé, sur une des faces de la plaque, d'une portion cylindrique d'encastrement de l'absorbeur d'énergie, caractérisé en ce que :
- on réalise par extrusion à partir d'au moins un lopin en aluminium ou en alliage d'aluminium au moins une ébauche comportant une semelle de forme correspondant sensiblement à la forme de la semelle de la platine et munie, sur l'une de ses faces, de deux membrures longitudinales et parallèles s'étendant perpendiculairement à ladite face, la hauteur des membrures étant sensiblement égale à la hauteur de la portion cylindrique et l'écartement desdites membrures étant sensiblement égal au diamètre de l'orifice,

- on perce l'orifice de la semelle de l'ébauche entre les membrures,
- on découpe la base des membrures de la semelle en ménageant au milieu une portion de liaison avec ladite semelle pour former, sur chaque membrure, deux portions libres séparées de la semelle et disposées de part et d'autre de ladite portion de liaison,
- on recourbe chaque portion libre selon le contour de l'orifice central pour amener en contact le bord d'extrémité des portions libres des deux membrures, et
- on soude les bords d'extrémité adjacents entre eux et la base des portions libres des membrures sur la semelle pour former la portion cylindrique de la platine.

Selon une autre caractéristique de l'invention, la soudure est de type soudure MIG.

L'invention a aussi pour objet une platine de support d'un absorbeur d'énergie d'un pare-chocs de véhicule automobile, de type comprenant une semelle de fixation sur l'extrémité d'un longeron et comportant un orifice central bordé, sur une des faces de la semelle, d'une portion cylindrique d'encastrement de l'absorbeur d'énergie, caractérisée en ce qu'elle est réalisée par le procédé précédemment mentionné.

Selon une autre caractéristique de l'invention, la platine de support est en aluminium ou en alliage d'aluminium.

L'invention a également pour objet un pare-chocs pour véhicule automobile selon la revendication 5.

Selon d'autres caractéristiques de l'invention :
- la poutre est cintrée après son extrusion,
- la poutre est formée par un profilé à contour fermé comprenant une semelle avant et une semelle arrière parallèle à ladite semelle avant et reliées entre elles par une feuillure supérieure, une feuillure inférieure et une feuillure intermédiaire, lesdites feuillures étant parallèles les unes aux autres,
- l'encastrement d'une extrémité de chaque absorbeur d'énergie dans la poutre est formé par une ouverture ménagée dans la semelle arrière et de forme conjuguée à cette extrémité de l'absorbeur d'énergie et par une découpe ménagée dans la feuillure intermédiaire et de forme conjuguée à la section axiale de ladite extrémité de l'absorbeur d'énergie,
- chaque platine de support comporte une plaque de fixation sur le longeron correspondant,
- l'encastrement d'une extrémité de chaque absorbeur d'énergie dans la platine de support est formé par un orifice ménagé dans la plaque dudit absorbeur et de forme conjuguée à cette extrémité et par un rebord en saillie ménagé sur le pourtour de l'orifice et formant un logement pour ladite extrémité de l'absorbeur d'énergie,
- la soudure de l'absorbeur d'énergie sur la poutre est réalisée entre le pourtour de l'extrémité de cet absorbeur encastrée dans la poutre et le bord de l'ouverture de la semelle arrière de ladite poutre,
- la soudure de l'absorbeur d'énergie sur la platine de support est réalisée entre l'extrémité de cet absorbeur disposée dans l'ouverture de la plaque de la platine de support et le bord de cette ouverture,
- chaque soudure est une soudure de type MIG,
- chaque absorbeur d'énergie a la forme d'un cylindre,
- le cylindre de chaque absorbeur d'énergie comporte des moyens d'amorçage du flambage dudit cylindre formés par au moins une gorge annulaire réalisée par hydroformage.

Les caractéristiques et avantages de l'invention apparaîtront au cours de la description qui va suivre, donnée à titre d'exemple et faite en référence aux dessins annexés, sur lesquels :
- la Fig. 1 est une vue schématique en perspective d'un pare-chocs conforme à l'invention,
- la Fig. 2 est une vue schématique en perspective d'une poutre du pare-chocs conforme à l'invention,
- la Fig. 3 est une vue schématique en perspective d'un absorbeur d'énergie du pare-chocs conforme à l'invention,
- la Fig. 4 est une vue schématique en perspective d'un absorbeur d'énergie comportant une platine de support conforme à l'invention,
- la Fig. 5 est une vue en perspective de la platine de support conforme à l'invention,
- les Figs. 6 à 8 sont des vues en perspectives montrant les différentes étapes du procédé de fabrication de la platine de support conforme à l'invention,
- les Figs. 9 et 10 sont des vues en perspective montrant l'assemblage d'un absorbeur d'énergie respectivement dans la poutre et dans la platine de support du pare-chocs conforme à l'invention.

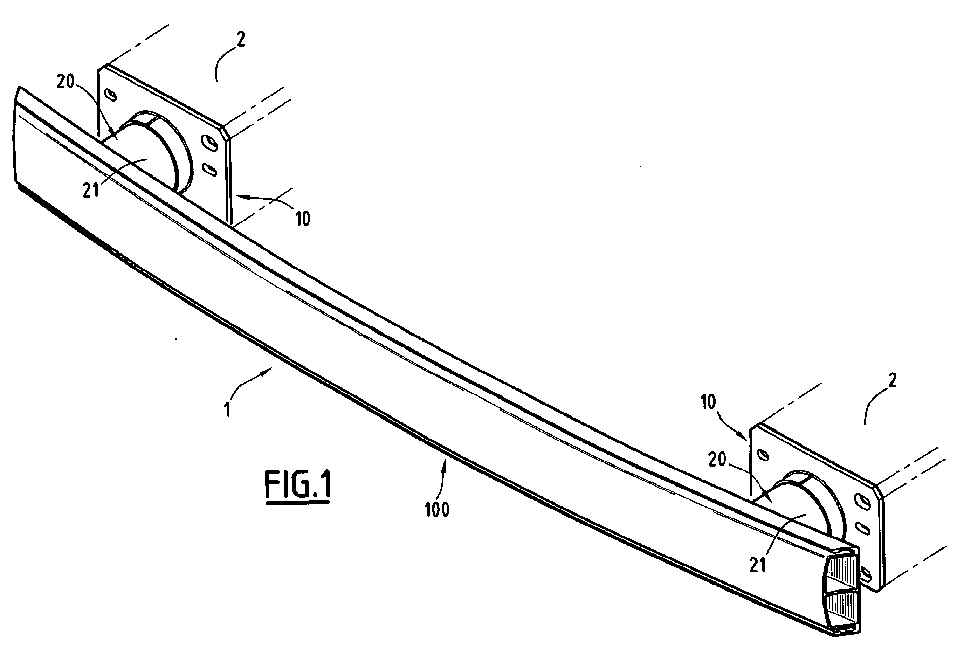

Sur la Fig. 1, on a représenté schématiquement un pare-chocs désigné dans son ensemble par la référence 1 qui est monté par exemple à l'avant d'un véhicule automobile sur deux longerons 2 de la structure de ce véhicule automobile.

Le pare-chocs 1 est formé par une poutre 100 s'étendant perpendiculairement au longeron 2 et reliée à chacune de ses extrémités à ces longerons 2 par l'intermédiaire d'un absorbeur d'énergie 20 fixé sur l'extrémité du longeron 2 correspondant au moyen d'une platine de support désignée par la référence générale 10.

D'une manière générale, la poutre 100, les absorbeurs d'énergie 20 et les platines de support 10 sont en aluminium ou en alliage d'aluminium et réalisés par extrusion. La poutre 100 après extrusion, est cintrée pour lui donner un galbe s'adaptant au style général du véhicule automobile.

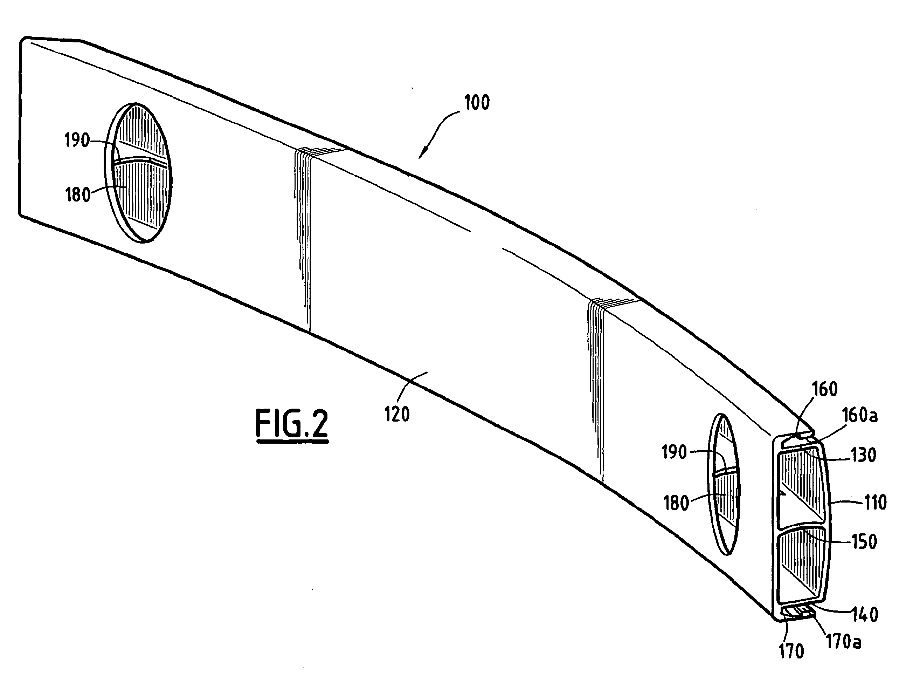

Ainsi que montré à la Fig. 2, la poutre 100 est formée par un profilé à contour fermé comprenant une semelle avant 110 et une semelle arrière 120 parallèles entre elles et qui sont reliées l'une avec l'autre par une feuillure supérieure 130, une feuillure inférieure 140 et une feuillure intermédiaire 150.

Ces feuillures 130, 140 et 150 sont parallèles les unes aux autres.

De plus, la semelle arrière 120 comporte un rebord supérieur 160 s'étendant parallèlement au-dessus de la feuillure supérieure 130 et ménageant avec celle-ci une gorge longitudinale 160a de montage par exemple d'un enjoliveur, non représenté.

Cette semelle arrière 120 comporte aussi un rebord inférieur 170 s'étendant parallèlement au-dessous de la feuillure 140 et ménageant avec celle-ci une gorge longitudinale 170a de montage par exemple d'un enjoliveur, non représenté.

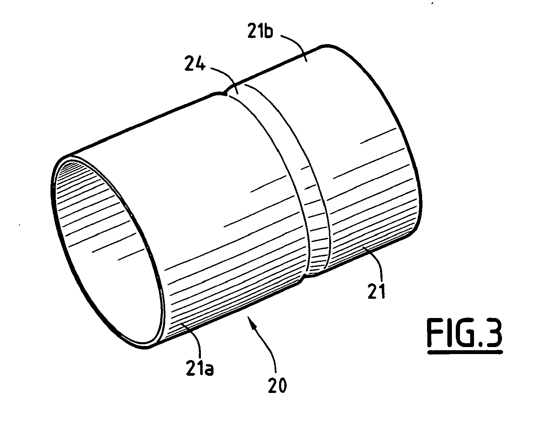

L'absorbeur d'énergie 20 représenté à la Fig. 3 se compose, dans cet exemple de réalisation, par une portion cylindrique 21. Cet absorbeur d'énergie 20 est réalisé par extrusion d'un cylindre comportant deux portions de cylindre 21 formant chacune un absorbeur d'énergie 20, ces deux portions 21 étant séparées l'une de l'autre par un outil approprié.

Chaque absorbeur d'énergie 20 peut présenter une autre forme, comme par exemple, une forme carrée ou présenter différentes sections.

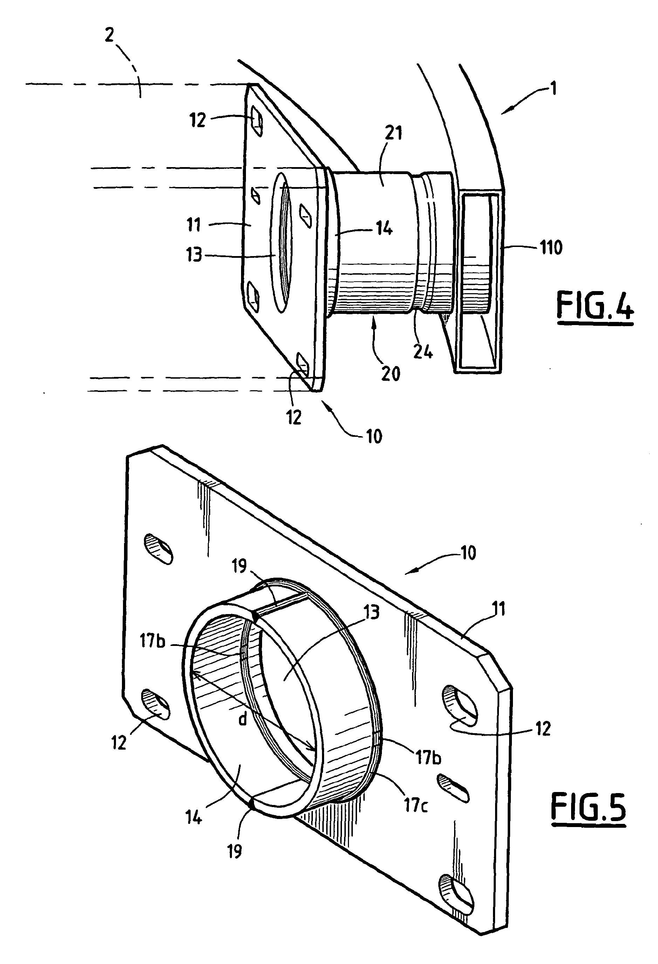

Ainsi que montré aux Figs. 4 et 5, chaque platine de support 10 comprend une semelle 11 de fixation sur l'extrémité du longeron 2 correspondant au moyen d'organes de vissage, non représentés, qui traversent la semelle 11 par des orifices 12.

La semelle 11 est également percée d'un orifice central 13 qui est bordé, sur une des faces de ladite semelle 11, par une portion cylindrique 14 d'encastrement de l'absorbeur d'énergie 20, ainsi que montré à la Fig. 4.

Le procédé de fabrication d'une telle platine de support 10 comprend les étapes suivantes.

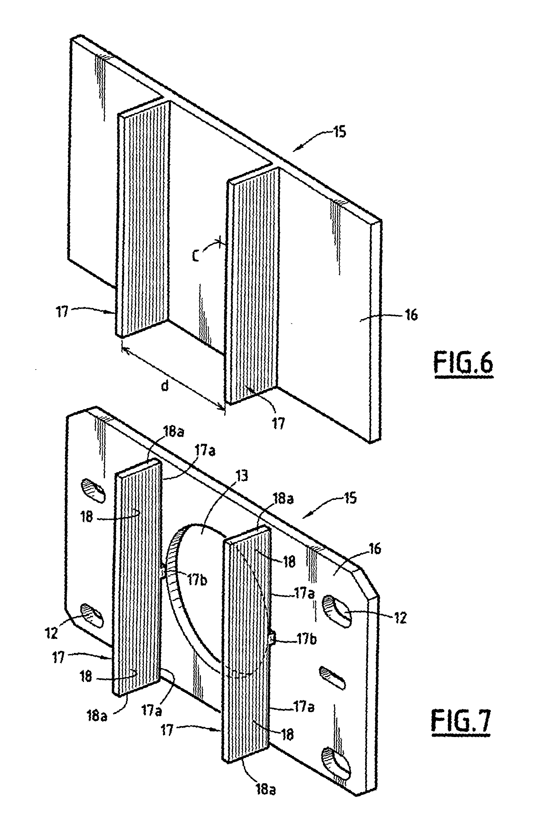

Tout d'abord, on réalise par extrusion à partir d'au moins un lopin en aluminium ou en alliage d'aluminium au moins une ébauche désignée par la référence générale 15 et représentée à la Fig. 6.

Pour cela, on introduit en force le lopin d'aluminium ou en alliage d'aluminium dans un canal d'une filière de section correspondant à la section de l'ébauche 15 à obtenir.

Comme montré à la Fig. 6, cette ébauche 15 comprend une semelle 16 de forme correspondant sensiblement à la forme de la semelle 11 de la platine 10. Cette semelle 16 se présente sous la forme d'une plaque rectangulaire.

La semelle 16 est munie, sur l'une de ses faces, de deux membrures 17 longitudinales et parallèles, s'étendant perpendiculairement à ladite face. Les membrures 17 sont situées de part et d'autre du centre "C" de la semelle 16 et l'encastrement "d" desdites membrures 17 est sensiblement égal au diamètre "d" de l'orifice central 13 de la semelle 11 de la platine 10. Par ailleurs, la hauteur des deux membrures 17 est sensiblement égale à la longueur de la portion cylindrique 14 de la platine 10.

Selon un mode de réalisation préférentiel, on réalise en une seule opération d'extrusion deux ébauches formées en une seule pièce. Ensuite, on sépare les deux ébauches 15 et elles sont usinées séparément.

La réalisation de l'ébauche 15 par extrusion d'aluminium ou d'alliage d'aluminium permet d'obtenir une meilleure optimisation des épaisseurs matière puisque ce type de procédé permet de mettre la matière là où elle est utile.

Ensuite, le contour de la semelle 16 de l'ébauche 15 est usiné pour la mettre aux cotes de la semelle 11 de la platine 10 et l'orifice central 13, ainsi que les orifices 12 de fixation sur le longeron 2, sont percés, comme montré à la Fig. 4.

Après cette opération de perçage, la base 17a des membrures 17 est découpée de la semelle 16 par un outil approprié de type connu et cette découpe est réalisée à partir des deux bords d'extrémité libres des deux membrures 17 jusqu'au centre de chacune de ces membrures 17, tout en ménageant au milieu desdites membrures 17, une portion 17b non découpée et qui permet de maintenir les membrures 17 et la semelle 16 reliées entre elles par cette portion de liaison, ainsi que montré à la Fig. 7.

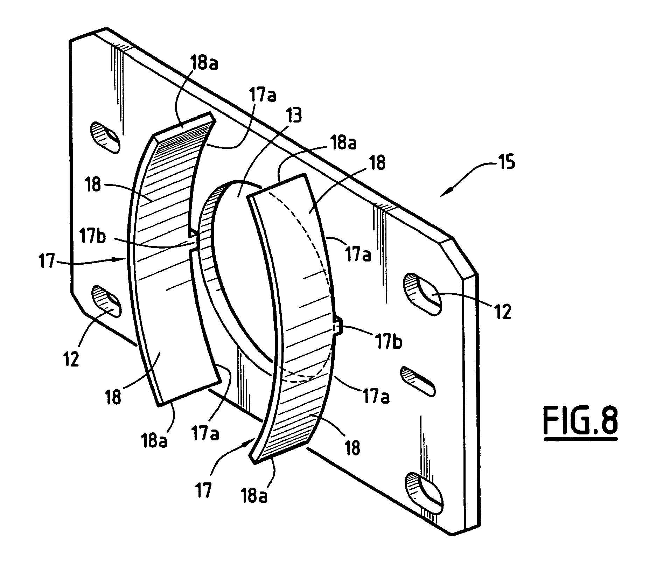

Les deux portions libres 18 des deux membrures 17 situées de part et d'autre de la portion 17b, sont progressivement recourbées vers le centre "C" de la semelle 16 de l'ébauche 15 et selon le contour circulaire de l'orifice central 13 pour amener les bords d'extrémité 18a des portions libres 18 des deux membrures 17 en contact, comme montré à la Fig. 8.

Les bords d'extrémité 18a adjacents sont reliés entre eux par une soudure 19 et la base 17a des membrures 17 est reliée à la semelle 16 par une soudure 17c permettant ainsi de former la portion cylindrique 14 de la platine 10. Les soudures 17c et 19 sont de préférence des soudures de type MIG.

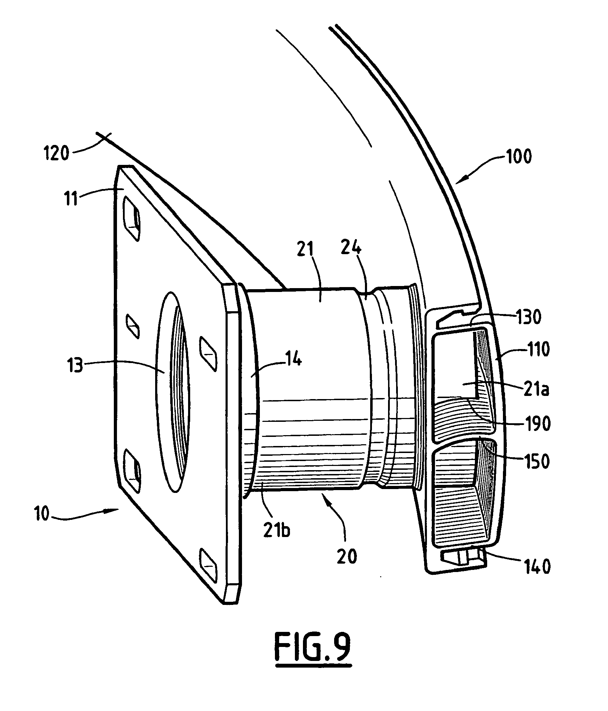

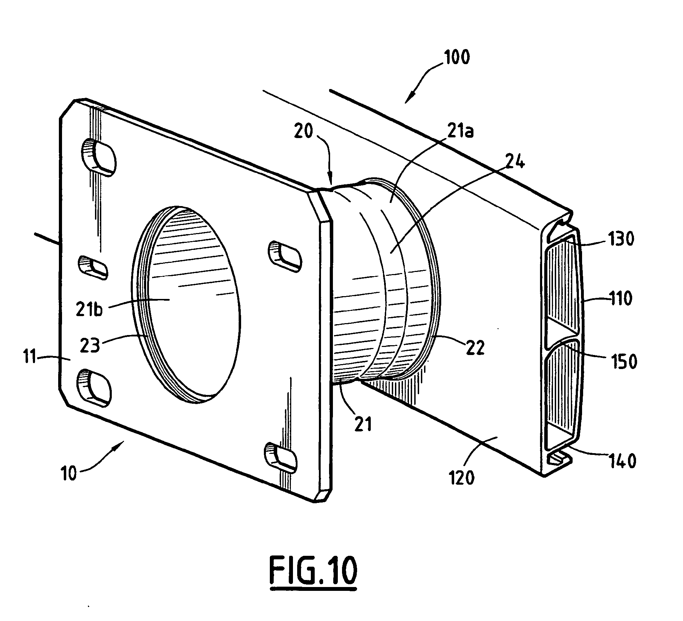

En se reportant maintenant aux Figs. 9 et 10, on va décrire la liaison d'un absorbeur d'énergie 20 respectivement avec la poutre 100 et la platine de support 10, la liaison de l'autre absorbeur d'énergie 20 étant identique.

D'une manière générale, l'absorbeur d'énergie 20 est relié avec la poutre 100 et la platine de support 10 par un encastrement et au moins une soudure.

L'encastrement de l'extrémité 21a du cylindre 21 formant l'absorbeur d'énergie 20 est constitué par une ouverture 180 ménagée dans la semelle arrière 120 de la poutre 100 et qui présente une forme conjuguée à cette extrémité 21a de la l'absorbeur d'énergie 20. Dans l'exemple de réalisation représenté sur ces figures, l'ouverture 180 est donc de forme circulaire.

L'encastrement de l'extrémité 21a de la l'absorbeur d'énergie 20 est également constitué par une découpe 190 ménagée dans la feuillure intermédiaire 150 et de forme conjuguée à la section axiale de ladite extrémité de cet absorbeur d'énergie 20.

Dans le cas présent, la découpe 190 présente une forme rectangulaire, ainsi que montré sur les Figs. 2 et 9.

La solidarisation de l'absorbeur d'énergie 20 avec la poutre 100 est obtenue par un cordon de soudure 22 (Fig. 10) de préférence de type MIG, réalisé entre le pourtour de l'extrémité 21a de l'absorbeur d'énergie 20 encastré dans la poutre 100 et le bord de l'ouverture 180 de la semelle arrière 120 de ladite poutre 100.

L'encastrement de l'extrémité opposée 21b du cylindre 21 formant l'absorbeur d'énergie 20 dans la platine de support 10 est formé par l'orifice central 13 de la plaque 11 et par le rebord en saillie 14 ménagé sur le pourtour de cet orifice central 13 et qui forme un logement pour ladite extrémité. L'extrémité 21b de l'absorbeur d'énergie 20 est placée à l'intérieur du rebord en saillie 14 et dans l'orifice 13 et la solidarisation entre l'absorbeur d'énergie 20 et la platine de support 10 est obtenue par un cordon de soudure 23 de préférence de type MIG, réalisé entre l'extrémité 21b disposée dans l'orifice central 13 et le bord de cet orifice 13 du côté opposé de la plaque à celui comportant le rebord en saillie, ainsi que montré à la Fig. 10.

Enfin, chaque absorbeur d'énergie 20 peut comporter des moyens d'amorçage du flambage du cylindre 21 en cas de chocs et qui sont formés par exemple par une gorge annulaire 24 réalisée par exemple par hydroformage.

La réalisation des platines de support conforme à l'invention en aluminium ou en alliage d'aluminium permet d'obtenir un gain de masse sur l'ensemble des pièces composant le pare-chocs et le procédé de fabrication de ce type de platine de support par extrusion permet de réduire les coûts de fabrication.

L'encastrement des deux extrémités de chaque absorbeur d'énergie respectivement dans la poutre du pare-chocs et dans la platine de support fixée sur le longeron correspondant permet d'obtenir un assemblage de plusieurs éléments possédant de bonnes caractéristiques mécaniques de façon à garantir un maximum d'absorption d'énergie cinétique en cas de choc.

Par ailleurs, le procédé d'extrusion d'aluminium ou d'alliage d'aluminium utilisé pour réaliser l'ensemble des pièces composant le pare-chocs selon l'invention permet d'obtenir une meilleure optimisation des épaisseurs de la matière puisque ce type de procédé permet de mettre la matière là où elle est utile selon la fonction de chaque élément composant ce pare-chocs.

Enfin, l'utilisation d'un matériau comme l'aluminium ou un alliage d'aluminium permet de répondre aux contraintes de style tout en optimisant au mieux la masse de l'ensemble et le coût de fabrication.

## Revendications

1. Procédé de fabrication d'au moins une platine de support (10) d'un absorbeur d'énergie (20) d'un pare-chocs (1) de véhicule automobile, du type comprenant une semelle (11) de fixation sur l'extrémité d'un longeron (2) et comportant un orifice central (13) bordé, sur une des faces de la semelle (11), d'une portion cylindrique (14) d'encastrement de l'absorbeur d'énergie (20), **caractérisé en ce que** :
- on réalise par extrusion à partir d'au moins un lopin en aluminium ou en alliage d'aluminium au moins une ébauche (15) comportant une semelle (16) de forme correspondant sensiblement à la forme de la semelle (12) de la platine (10) munie sur l'une de ses faces, de deux membrures (17) longitudinales et parallèles, s'étendant perpendiculairement à ladite face, la hauteur des deux membrures (17) étant sensiblement égal à la portion cylindrique (14) et l'écartement desdites membrures (17) étant sensiblement égal au diamètre de l'orifice (13),
- on perce l'orifice central (13) de la semelle (16) de l'ébauche (15) entre les membrures (17),
- on découpe la base (17a) des membrures (17) de la semelle (16) en ménageant au milieu une portion de liaison (17b) avec ladite semelle (16) pour former, sur chaque membrure (17), deux portions libres (18) séparées de la semelle (16) et disposées de part et d'autre de ladite portion de liaison (17b),
- on recourbe chaque portion libre (18) selon le contour de l'orifice central (13) pour amener le bord d'extrémité (18a) des portions libres (18) des deux membrures (17) en contact, et
- on soude les bords d'extrémités (18a) adjacents entre eux et la base (17a) des portions libres (18) des membrures (17) sur la semelle (16) pour former la portion cylindrique (14) de la platine (10).

2. Procédé selon la revendication 1, **caractérisé en ce que** la soudure est du type soudure MIG.

3. Platine de support (10) d'un absorbeur d'énergie (20) d'un pare-chocs (1) de véhicule automobile, du type comprenant une semelle (11) de fixation sur l'extrémité d'un longeron (2) et comportant un orifice central (13) bordé sur une des faces de la semelle (11), d'une portion cylindrique (14) d'encastrement de l'absorbeur d'énergie (20), **caractérisée en ce qu'**elle est réalisée par le procédé selon la revendication 1 ou 2.

4. Platine de support selon la revendication 3, **caractérisée en ce qu'**elle est réalisée en aluminium ou en alliage d'aluminium.

5. Pare-chocs pour véhicule automobile, du type comprenant une poutre (100) et au moins deux absorbeurs d'énergie (20) s'étendant perpendiculairement à la poutre (100) et reliés chacun, d'une part, à ladite poutre (100) et, d'autre part, à un longeron (2) de la structure du véhicule automobile par une platine de support (10) selon la revendication 3 la poutre (100), les absorbeurs d'énergie (20) et les platines de support (10) étant en aluminium ou en alliage d'aluminium et réalisés par extrusion, **caractérisé en ce que** chaque absorbeur d'énergie (20) est relié à la poutre (100) ainsi qu'à la platine de support (10) par un encastrement et au moins une soudure (22, 23).

6. Pare-chocs selon la revendication 5, **caractérisé en ce que** la poutre (100) est cintrée après son extrusion.

7. Pare-chocs selon la revendication 5 ou 6, **caractérisé en ce que** la poutre (100) est formée par un profilé à contour fermé comprenant une semelle avant (110) et une semelle arrière (120) parallèle à ladite semelle avant et reliées entre elles par une feuillure supérieure (130), une feuillure intérieure (140) et une feuillure intermédiaire (150), lesdites feuillures (130, 140, 150) étant parallèles les unes aux autres.

8. Pare-chocs selon la revendication 7, **caractérisé en ce que** la semelle arrière (120) comporte un rebord supérieur (160) s'étendant parallèlement au-dessus de la feuillure supérieure (130) et ménageant avec celle-ci une gorge longitudinale (160a) de montage d'un enjoliveur.

9. Pare-chocs selon la revendication 7 ou 8, **caractérisé en ce que** la semelle arrière (120) comporte un rebord inférieur (170) s'étendant parallèlement au-dessous de la feuillure inférieure (140) et ménageant avec celle-ci une gorge longitudinale (170a) de montage d'un enjoliveur.

10. Pare-chocs selon l'une quelconque des revendications 7 à 9, **caractérisé en ce que** l'encastrement d'une extrémité (21 a) de chaque absorbeur d'énergie (20) dans la poutre (100) est formé par une ouverture (180) ménagée dans la semelle arrière (120) et de forme conjuguée à cette extrémité (21a) de l'absorbeur d'énergie (20) et par une découpe (190) ménagée dans la feuillure intermédiaire (150) et de forme conjuguée à la section axiale de ladite extrémité (21 a) de cet absorbeur d'énergie (20).

11. Pare-chocs selon la revendication 5, **caractérisé en ce que** chaque platine de support (10) comporte une plaque (31) de fixation sur le longeron (2) correspondant.

12. Pare-chocs selon la revendication 11, **caractérisé en ce que** l'encastrement d'une extrémité (21 b) de chaque absorbeur d'énergie (20) dans la platine de support (10) est formé par un orifice central (13) ménagé dans la plaque (11) de ladite platine de support (10) et de forme conjuguée à cette extrémité (21b) et par un rebord en saillie (14) ménagé sur le pourtour de l'orifice central (13) et formant un logement pour ladite extrémité (21 b) de cet absorbeur d'énergie (20).

13. Pare-chocs selon la revendication 10, **caractérisé en ce que** la soudure (22) de l'absorbeur d'énergie (20) sur la poutre (100) est réalisée entre le pourtour de l'extrémité (21 a) de cet absorbeur d'énergie (20) encastrée dans la poutre (100) et le bord de l'ouverture (180) de la semelle arrière (120) de ladite poutre (10).

14. Pare-chocs selon la revendication 11 ou 12, **caractérisé en ce que** la soudure (23) de l'absorbeur d'énergie (20) sur la platine de support (10) est réalisée entre l'extrémité (21) de cet absorbeur d'énergie (20) disposée dans l'orifice central (13) de la plaque (11) de la platine de support (10) et le bord de cet orifice central (13).

15. Pare-chocs selon la revendication 13 ou 14, **caractérisé en ce que** chaque soudure (22, 23) est une soudure du type MIG.

16. Pare-chocs selon l'une quelconque des revendications précédéntes, **caractérisé en ce que** chaque absorbeur d'énergie (20) a la forme d'un cylindre (21).

17. Pare-chocs selon la revendication 16, **caractérisé en ce que** le cylindre (21) de chaque absorbeur d'énergie (20) comporte des moyens (24) d'amorçage du flambage dudit cylindre (21).

18. Pare-chocs selon la revendication 17, **caractérisé en ce que** le moyens d'amorçage du flambage sont formés par au moins une gorge annulaire (24) réalisée par hydroformage.

## Claims

1. Method for the manufacture of at least one support plate (10) for an energy-absorbing element (20) of a motor vehicle bumper (1), of the type comprising a soleplate (11) for fixing to the end of a side member (2) and having a central orifice (13) which is bordered, on one of the faces of the soleplate (11), by a cylindrical fitting portion (14) of the energy-absorbing element (20), **characterised in that**:
- there is produced by extrusion from at least one blank made of aluminium or aluminium alloy at least one preform (15) which comprises a base (16) having a shape that corresponds substantially to the shape of the soleplate (12) of the plate (10) and which is provided on one of its faces with two longitudinal and parallel flanges (17) extending perpendicularly to said face, the height of the two flanges (17) being substantially equal to the cylindrical portion (14) and the spacing between said flanges (17) being substantially equal to the diameter of the orifice (13),
- the central orifice (13) of the soleplate (16) of the preform (15) is drilled between the flanges (17),
- the base (17a) of the flanges (17) is cut away from the soleplate (16) while a connecting portion (17b) with said soleplate (16) is formed in the middle, in order to form, on each flange (17), two free portions (18) which are separate from the soleplate (16) and are arranged on either side of said connecting portion (17b),
- each free portion (18) is bent according to the contour of the central orifice (13) in order to bring the end edge (18a) of the free portions (18) of the two flanges (17) into contact, and
- the adjacent end edges (18a) are welded together and the base (17a) of the free portions (18) of the flanges (17) are welded to the soleplate (16) in order to form the cylindrical portion (14) of the plate (10).

2. Method according to claim 1, **characterised in that** the weld is of the MIG weld type.

3. Support plate (10) for an energy-absorbing element (20) of a motor vehicle bumper (1), of the type comprising a soleplate (11) for fixing to the end of a side member (2) and comprising a central orifice (13) bordered on one of the faces of the soleplate (11) by a cylindrical fitting portion (14) of the energy-absorbing element (20), **characterised in that** it is produced by the method according to claim 1 or 2.

4. Support plate according to claim 3, **characterised in that** it is made of aluminium or aluminium alloy.

5. Bumper for a motor vehicle, of the type comprising a beam (100) and at least two energy-absorbing elements (20) which extend perpendicularly to the beam (100) and are each connected by means of a support plate (10) according to claim 3 on the one hand to said beam (100) and on the other hand to a side member (2) of the motor vehicle structure, the beam (100), the energy-absorbing elements (20) and the support plates (10) being made of aluminium or aluminium alloy and being produced by extrusion,
**characterised in that** each energy-absorbing element (20) is connected to the beam (100) as well as to the support plate (10) by means of a fitting and at least one weld (22, 23).

6. Bumper according to claim 5, **characterised in that** the beam (100) is bent after it has been extruded.

7. Bumper according to claim 5 or 6, **characterised in that** the beam (100) is formed by a profile which has a closed contour and comprises a front soleplate (110) and a rear soleplate (120) parallel to said front soleplate, which soleplates are connected together by an upper rebate (130), a lower rebate (140) and an intermediate rebate (150), said rebates (130, 140, 150) being parallel with one another.

8. Bumper according to claim 7, **characterised in that** the rear soleplate (120) comprises an upper edge (160) which extends parallel to and above the upper rebate (130) and forms therewith a longitudinal groove (160a) for the mounting of a decorative trim.

9. Bumper according to claim 7 or 8, **characterised in that** the rear soleplate (120) comprises a lower edge (170) which extends parallel to and below the lower rebate (140) and forms therewith a longitudinal groove (170a) for the mounting of a decorative trim.

10. Bumper according to any one of claims 7 to 9, **characterised in that** the fitting of one end (21a) of each energy-absorbing element (20) into the beam (100) is formed by an opening (180) which is formed in the rear soleplate (120) and has a form conjugate with that end (21a) of the energy-absorbing element (20), and by a cut (190) which is formed in the intermediate rebate (150) and has a form conjugate with the axial section of said end (21a) of that energy-absorbing element (20).

11. Bumper according to claim 5, **characterised in that** each support plate (10) has a plate (31) for fixing to the corresponding side member (2).

12. Bumper according to claim 11, **characterised in that** the fitting of one end (21b) of each energy-absorbing element (20) into the support plate (10) is formed by a central orifice (13) which is formed in the plate (11) of said support plate (10) and has a form conjugate with that end (21b), and by a projecting edge (14) which is provided on the periphery of the central orifice (13) and forms a housing for said end (21b) of the energy-absorbing element (20).

13. Bumper according to claim 10, **characterised in that** the weld (22) of the energy-absorbing element (20) to the beam (100) is produced between the periphery of the end (21a) of the energy-absorbing element (20) that is fitted into the beam (100) and the edge of the opening (180) of the rear soleplate (120) of said beam (10).

14. Bumper according to claim 11 or 12, **characterised in that** the weld (23) of the energy-absorbing element (20) to the support plate (10) is produced between the end (21) of the energy-absorbing element (20) that is arranged in the central orifice (13) of the plate (11) of the support plate (10) and the edge of the central orifice (13).

15. Bumper according to claim 13 or 14, **characterised in that** each weld (22, 23) is a weld of the MIG type.

16. Bumper according to any one of the preceding claims, **characterised in that** each energy-absorbing element (20) is in the form of a cylinder (21).

17. Bumper according to claim 16, **characterised in that** the cylinder (21) of each energy-absorbing element (20) comprises means (24) for initiating buckling of said cylinder (21).

18. Bumper according to claim 17, **characterised in that** the means for initiating buckling are formed by at least one annular groove (24) produced by hydroforming.

## Patentansprüche

1. Verfahren zur Herstellung mindestens einer Trägerplatine (10) eines Energieabsorbers (20) einer Kraftfahrzeug-Stoßstange (1), umfassend eine Grundplatte (11) zur Befestigung an dem Ende eines Längsträgers (2) und umfassend eine zentrale Öffnung (13), die auf einer der Seiten der Grundplatte (11) von einem zylindrischen Abschnitt (14) zum Einlassen des Energieabsorbers (20) gesäumt ist, **dadurch gekennzeichnet, dass**
- man durch Extrusion aus mindestens einem Rohteil aus Aluminium oder Aluminiumlegierung mindestens einen Rohling (15) herstellt, der eine Grundplatte (16) umfasst, deren Form im Wesentlichen der Form der Grundplatte (12) der Platine (10) entspricht und die auf einer ihrer Seiten mit zwei parallelen Längsgurten (17) versehen ist, die sich senkrecht zu dieser Seite erstrecken, wobei die Höhe der beiden Gurte (17) im Wesentlichen gleich dem zylindrischen Abschnitt (14) ist und der Abstand dieser Rippen (17) im Wesentlichen gleich dem Durchmesser der Öffnung (13) ist,
- man die zentrale Öffnung (13) der Grundplatte (16) des Rohlings (15) zwischen den Gurten (17) bohrt,
- man die Basis (17a) der Gurte (17) der Grundplatte (16) einschneidet, indem man in der Mitte einen Abschnitt (17b) zur Verbindung mit der Grundplatte (16) stehen lässt, um an jedem Gurt (17) zwei freie Teile (18) zu bilden, die von der Grundplatte (16) getrennt sind und zu beiden Seiten des Verbindungsabschnitts (17b) angeordnet sind,
- man jeden freien Abschnitt (18) entsprechend dem Umriss der zentralen Öffnung (13) krümmt, um den Endrand (18a) der freien Abschnitte (18) der beiden Gurte (17) in Kontakt zu bringen, und
- man die benachbarten Endränder (18a) miteinander verschweißt und die Basis (17a) de freien Abschnitte (18) der Gurte (17) an der Grundplatte (16) anschweißt, um den zylindrischen Abschnitt (14) der Platine (10) zu bilden.

2. Verfahren nach Anspruch 1, **dadurch gekennzeichnet, dass** die Verschweißung eine MIG-Schweißung ist.

3. Trägerplatine (10) eines Energieabsorbers (20) einer Kraftfahrzeug-Stoßstange (1), umfassend eine Grundplatte (11) zur Befestigung an dem Ende eines Längsträgers (2) und umfassend eine zentrale Öffnung (13), die auf einer der Seiten der Grundplatte (11) von einem zylindrischen Abschnitt (14) zum Einlassen des Energieabsorbers (20) gesäumt ist, **dadurch gekennzeichnet, dass** sie mit Hilfe des Verfahrens nach Anspruch 1 oder 2 hergestellt ist.

4. Trägerplatine nach Anspruch 3, **dadurch gekennzeichnet, dass** sie aus Aluminium oder aus Aluminiumlegierung hergestellt ist.

5. Stoßstange für ein Kraftfahrzeug, umfassend eine Stange (100) und mindestens zwei Energieabsorber (20), die sich senkrecht zu der Stange (100) erstrecken und jeweils einerseits mit der Stange (100) und andererseits mit einem Längsträger (2) der Struktur des Kraftfahrzeugs über eine Trägerplatine (10) nach Anspruch 3 verbunden sind, wobei die Stange (100), die Energieabsorber (20) und die Trägerplatinen (10) aus Aluminium oder Aluminiumlegierung bestehen und durch Extrusion hergestellt sind, **dadurch gekennzeichnet, dass** jeder Energieabsorber (20) mit der Stange (100) sowie mit der Trägerplatine (10) durch eine Einlassung und mindestens eine Schweißung (22, 23) verbunden ist.

6. Stoßstange nach Anspruch 5, **dadurch gekennzeichnet, dass** die Stange (100) nach ihrer Extrusion gekrümmt wird.

7. Stoßstange nach Anspruch 5 oder 6, **dadurch gekennzeichnet, dass** die Stange (100) von einem Profilteil mit geschlossenem Profil gebildet ist, das eine vordere Platte (110) und eine zu dieser vorderen Platte parallele hintere Platte (120) umfasst, die miteinander durch einen oberen Falz (130), einen inneren Falz (140) und einen Mittelfalz (150) verbunden sind, wobei diese Falze (130, 140, 150) zueinander parallel sind.

8. Stoßstange nach Anspruch 7, **dadurch gekennzeichnet, dass** die hintere Platte (120) einen oberen abgewinkelten Rand (160) umfasst, der sich parallel über dem oberen Falz (1309 erstreckt und mit diesem eine Längsnut (160a) zur Montage einer Zierleiste bildet.

9. Stoßstange nach Anspruch 7 oder 8, **dadurch gekennzeichnet, dass** die hintere Platte (120) einen unteren abgewinkelten Rand (170) umfasst, der sich parallel unter dem unteren Falz (140) erstreckt und mit diesem eine Längsnut (170a) zur Montage einer Zierleiste bildet.

10. Stoßstange nach einem der Ansprüche 7 bis 9, **dadurch gekennzeichnet, dass** die Einlassung eines Endes (21a) jedes Energieabsorbers (20) in die Stange (100) von einer in der hinteren Platte (120) vorgesehenen Öffnung (180), deren Form diesem Ende (21 a) des Energieabsorbers (20) entspricht, und von einem in dem Mittelfalz (150) vorgesehenen Ausschnitt (190) gebildet ist, dessen Form dem axialen Schnitt des Endes (21a) des Energieabsorbers (20) entspricht.

11. Stoßstange nach Anspruch 5, **dadurch gekennzeichnet, dass** jede Trägerplatine (10) eine Platte (31) zur Befestigung an dem entsprechenden Längsträger (2) umfasst.

12. Stoßstange nach Anspruch 11, **dadurch gekennzeichnet, dass** die Einlassung eines Endes (21b) jedes Energieabsorbers (20) in die Trägerplatine (10) von einer in der Platte (11) der Trägerplatine (10) vorgesehenen zentralen Öffnung (13), deren Form dem Ende (21b) entspricht, und von einem vorstehenden Rand (14) gebildet ist, der auf dem Umfang der zentralen Öffnung (13) vorgesehen ist und eine Aufnahme für dieses Ende (21b) des Energieabsorbers (20) bildet.

13. Stoßstange nach Anspruch 10, **dadurch gekennzeichnet, dass** die Verschweißung (22) des Energieabsorbers (20) mit der Stange (100) zwischen dem Umfang des in die Stange (100) eingelassenen Endes (21a) dieses Energieabsorbers (20) und dem Rand der Öffnung (180) der hinteren Platte (120) der hinteren Platte (120) der Stange (10) vorgesehen ist.

14. Stoßstange nach Anspruch 11 oder 12, **dadurch gekennzeichnet, dass** die Verschweißung (23) des Energieabsorbers (20) mit der Trägerplatine (10) zwischen dem in der zentralen Öffnung (13) der Platte (13) der Trägerplatine (10) angeordneten Ende (21) des Energieabsorbers (20) und dem Rand dieser zentralen Öffnung (13) vorgesehen ist.

15. Stoßstange nach Anspruch 13 oder 14, **dadurch gekennzeichnet, dass** jede Schweißung (22, 23) eine MIG-Schweißung ist.

16. Stoßstange nach einem der vorhergehenden Ansprüche, **dadurch gekennzeichnet, dass** jeder Energieabsorber die Form eines Zylinders (21) hat.

17. Stoßstange nach Anspruch 16, **dadurch gekennzeichnet, dass** der Zylinder jedes Energieabsorbers (20) Mittel (24) zur Initialisierung der Durchbiegung dieses Zylinders (21) umfasst.

18. Stoßstange nach Anspruch 17, **dadurch gekennzeichnet, dass** die Mittel zum Initialisieren der Durchbiegung von mindestens einer durch Hydroforming hergestellten ringförmigen Nut (24) gebildet sind.
